# FASCICULE DE BREVET EUROPEEN

(11) **EP 4 303 665 B1**
(45) Date de publication et mention de la délivrance du brevet: **18.12.2024**
(21) Numéro de dépôt: 22183434.4
(22) Date de dépôt: 06.07.2022
(51) Int. Cl.: G04B 39/00, C03C 15/00, G04B 31/004

(54) **COMPOSANT HORLOGER COMPRENANT UN SUBSTRAT EN VERRE TRANSPARENT À LA LUMIÈRE VISIBLE ET AYANT UNE RÉSISTANCE À LA RUPTURE AMÉLIORÉE**
UHRENKOMPONENTE MIT EINEM SUBSTRAT AUS GLAS, DAS FÜR SICHTBARES LICHT DURCHLÄSSIG IST, UND MIT VERBESSERTER BRUCHFESTIGKEIT
TIMEPIECE COMPONENT COMPRISING A GLASS SUBSTRATE TRANSPARENT TO VISIBLE LIGHT AND WITH IMPROVED RESISTANCE TO BREAKAGE

(43) Date de publication de la demande: 10.01.2024
(73) Titulaire: Association Suisse pour la Recherche Horlogère, 2002 Neuchâtel (CH)
(72) Inventeur: Vallat, Evelyne, 2054 Chézard-St-Martin (CH); Hogg, Andreas, 25500 Le Pré du Peu (FR)
(74) Mandataire: P&TS SA (AG, Ltd.)

(56) Documents cités:
- WO-A1-2017/006219
- WO-A1-2018/199045
- US-A1- 2015 346 686

## Description

### Domaine technique

La présente invention concerne un composant horloger comprenant un substrat en verre transparent à la lumière visible et ayant une résistance à la rupture améliorée, ainsi qu'un procédé de fabrication dudit composant.

### Etat de la technique

La silice fondue amorphe, ou silice vitreuse, (SiOz) a le potentiel théorique d'atteindre des performances mécaniques très élevées, définies par la force d'interaction Si-O (potentiel de résistance à la rupture calculé à 17GPa). En réalité, la silice vitreuse montre des performances mécaniques réduites par la présence de défauts (rayures, microfissures, microporosités, inclusions etc..). Ces défauts sont souvent causés au cours de la mise en forme du composant en silice vitreuse. Ces défauts sont généralement à l'origine de la propagation lente des fissures (slow crack growth). La propagation lente des fissures peut être assimilée à une corrosion sous contrainte liée à la présence de ions OH- de l'humidité ambiante et qui accélère la propagation des fissures à l'origine microscopique de la rupture des matériaux fragiles. La miniaturisation du composant permet de réduire la probabilité d'existence de défauts millimétriques (rayures, microfissures) étant donné qu'un petit composant aura statistiquement moins de défauts. L'utilisation de la silice vitreuse est donc plus intéressante pour la fabrication de petits composants, par exemple des composants de taille millimétrique ou sub-centimétrique, comme dans le cas de composants micromécaniques et horlogers.

Malgré le potentiel bénéfique de la réduction de la taille du composant mécanique pour exploiter les performances de la silice vitreuse, l'augmentation inévitable du rapport surface-volume et l'effet de la propagation lente des fissures rendent nécessaire la mise en oeuvre d'une solution apte à réduire la densité surfacique de défauts et à empêcher (ou du moins réduire) l'entrée d'humidité ambiante (en particulier les ions OH-) dans le composant.

Par ailleurs, des couches de passivation ont été développées pour les dispositifs électroniques dans les matériaux monocristallins couramment utilisés dans les applications opto-électroniques (en particulier : silicium, GaAs, etc..) dont la caractéristique technique principale est la perfection du réseau monocristallin indispensable pour assurer un fonctionnement optimal du dispositif. Dans ces domaines d'applications, la performance actuelle des dispositifs est limitée par la présence des défauts (en général atomiques) en surface ou aux interfaces.

Dans le secteur des composants électroniques (transistors) et des dispositifs photovoltaïques (PV) à base de silicium monocristallin, il est bien connu que les défauts atomiques sur les surfaces et/ou aux interfaces cristallines sont les facteurs déterminant les performances soit lorsque la taille des composants diminue, ou, comme dans les applications PV, lorsque la densité de défauts volumiques du matériau est insignifiante.

Les diverses solutions de passivation développées dans le secteur électronique et PV à base de silicium monocristallin consistent à revêtir la surface du volume actif avec une couche mince, le plus souvent amorphe, composée de silicium amorphe (a-Si :H), d'oxide de silicium (SiO2), de carbure de silicium (SiC), de nitrure de silicium (Si3N4) ou d'une composition résultant de leur mélange (p.ex : oxynitrures, oxycarbure de silicium), ou de leurs combinaisons (par ex. : SiO2 + Si3N4) ou de leur séquence d'empilement.

Afin de limiter l'entrée d'humidité ambiante, le composant en verre peut être recouvert d'une couche de paraffine ou d'un revêtement polymère (parylène, ORMOCER, etc...). Ces types de revêtements ne sont cependant pas adaptés pour des sollicitations tribologiques auxquelles la surface du composant doit répondre dans des applications micromécaniques et horlogères.

Il est également possible d'utiliser un type de verre plus résistant que la silice vitreuse à la propagation lente des fissures, tel qu'un verre aluminosilicate ou borosilicate.

US 2015/346686 A1 concerne un composant horloger comprenant une première partie à base de verre photo-structurable et au moins une seconde partie à base d'au moins un second matériau (ex. matériau céramique). Une surface de la première pièce est rendue solidaire d'une surface de la seconde pièce pour former un composant horloger monobloc.

### Bref résumé de l'invention

Un but de l'invention est l'application d'une couche de passivation de qualité électronique pour l'amélioration des performances mécaniques d'un verre transparent à la lumière visible dans des composants à l'échelle millimétrique à sub-centimétrique. Ici, le mot « verre » s'applique à un matériau amorphe ou nanocristallin. L'expression « transparent à la lumière visible » signifie transparent dans une gamme suffisante du domaine de longueur d'onde compris entre 0,38 µm et 0.78 µm, pour permettre à l'oeil humain de percevoir la présence d'un arrièreplan. Le verre transparent à la lumière visible sera simplement appelé « verre » dans la suite de cette divulgation. De tels verres sont intéressants dans le domaine horloger, en particulier pour la conception de composants esthétiques, ayant une grande rigidité et stabilité environnementale.

Un autre but de l'invention est l'amélioration des performances mécaniques, telle que la résistance à la rupture d'un verre transparent, pour son usage dans des microcomposants de taille millimétrique à submillimétrique, par exemple de type composants horlogers.

Selon l'invention, ces buts sont atteints notamment au moyen d'une couche de passivation à la surface d'un composant de manière à diminuer la densité surfacique de défauts ponctuels (type liaisons noncoordonnées ou sous-coordonnées) et isoler le composant de l'humidité (ions OH-) d'origine atmosphérique qui est à l'origine de l'accélération de la propagation des fissures menant à la rupture.

Plus particulièrement, l'invention se rapporte à un composant horloger et son procédé de fabrication selon les revendications indépendantes 1 et 9. Des modes de réalisation préférés sont définis dans les revendications dépendantes 2 à 8 et 10 à 14.

La faible épaisseur de la couche de passivation permet d'obtenir une haute précision dimensionnelle du composant. Cela est particulièrement avantageux dans les applications micromécaniques et horlogères.

### Brève description des figures

Des exemples de mise en oeuvre de l'invention sont indiqués dans la description illustrée par les figures annexées dans lesquelles :
la figure 1 illustre de manière schématique un composant micromécanique comprenant un substrat comportant une couche de passivation, selon un mode de réalisation;
la figure 2 montre une vue schématique et en section de la surface du substrat, selon un mode de réalisation;
la figure 3 rapporte des essais de la résistance à la rupture en flexion pour des disques en verre réalisés par un test B3B; et
la figure 4 rapporte des essais de résistance à la rupture en flexion 3 points meso-scale réalisés sur des micro-éprouvettes.

### Exemple(s) de modes de réalisation

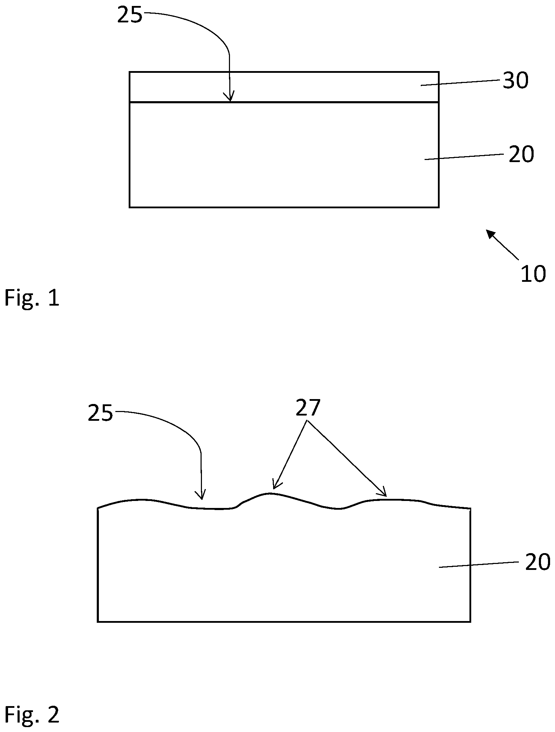

La figure 1 montre, de manière schématique, un composant 10 horloger comprenant un substrat 20 en verre transparent à la lumière visible ayant une dimension latérale de l'ordre de quelques centimètres ou inférieure et une épaisseur de l'ordre du millimètre ou inférieure. Le substrat 20 est revêtu d'une couche de passivation 30, directement en contact avec la surface 25 du substrat 20.

Le verre peut comprendre la silice vitreuse ou un verre contenant de la silice vitreuse.

Selon un mode de réalisation, la couche de passivation 30 a une épaisseur inférieure à 1000 nm, préférablement inférieure à 600 nm ou préférablement inférieure à 400 nm.

La couche de passivation 30 comprend une céramique réfractaire comprenant au moins 1 % atomique d'hydrogène.

La couche de passivation 30 permet de réduire la densité de défauts du substrat 20 améliorant entre autres la résistance aux chocs. La couche de passivation permet également d'isoler le substrat 20 (et donc le composant 10) de l'humidité ambiante, et donc des ions OH- présents dans l'atmosphère qui sont à l'origine de l'accélération de la propagation des fissures menant à la rupture. Selon le choix de sa composition chimique, la couche de passivation 30 peut en outre permettre de conserver l'aspect esthétique (invisibilité, transparence) du composant 10 initial usiné dans le substrat 20.

Le choix de l'une ou l'autre des compositions chimiques de la couche de passivation 30, ainsi que de son épaisseur peut également dépendre des caractéristiques requises pour le revêtement, par exemple la tenue sur le substrat, l'aptitude au transport de charge, la transparence, la conformité, la température de déposition, la dureté, la barrière chimique à la migration ionique, le comportement tribologique, la compatibilité chimique avec des lubrifiants, etc.

Selon une forme d'exécution, la céramique réfractaire comprend l'un des éléments suivants : un oxynitrure de silicium hydrogéné (SiON:H), oxycarbure de silicium hydrogéné (SiOxCy:H), carbure de silicium hydrogéné (SiC:H), nitrure de silicium hydrogéné (Si3N4:H), ou une combinaison de ces éléments.

La couche de passivation 30 en céramique réfractaire comprenant une céramique SiON:H, SiOxCy:H, SiC:H ou Si3N4:H, ou une combinaison de ces céramiques permet d'assurer la transparence visuelle de la couche et est hermétique au transport des ions, en particulier des ions OH-, vers le substrat 20.

Une teneur en hydrogène de l'ordre de quelques pourcents atomiques permet de saturer les défauts constitués par des liaisons atomiques insaturées à la surface 25 du substrat 20. Par exemple, sur une surface 25 d'un substrat en silicium monocristallin, l'hydrogène permet de réduire la densité de liaisons pendantes. L'importance et les effets de la passivation hydrogène sont exploités dans l'industrie de l'électronique des semiconducteurs et dans les applications photovoltaïques. Dans la présente invention, la couche de passivation 30 comprenant une céramique réfractaire comprenant au moins 1 % atomique d'hydrogène permet d'améliorer la résistance à la rupture du composant 10.

Dans le cas d'un matériau fragile, tel que le verre constituant le substrat 20, la résistance à la rupture est inversement proportionnelle à la densité de défauts potentiellement à l'origine d'une microfissure dont la propagation va conduire à la défaillance du composant 10.

La couche de passivation comprenant une céramique réfractaire comprenant au moins 1 % atomique d'hydrogène permet de réduire la densité surfacique de défauts à la surface 25 du substrat 20. Une réduction de la densité surfacique de défauts augmente la résistance mécanique, et en particulier la résistance à la rupture, du composant 10.

Une épaisseur inférieure à 1000 nm, inférieure à 600 nm, ou inférieure à 400 nm, permet à la couche de passivation 30 de jouer un rôle de barrière à la pénétration d'impuretés catalysant ou accélérant la propagation des microfissures, par exemple les ions OH- dans un substrat 20 de silice vitreuse.

Les performances de la couche de passivation 30, en particulier la réduction de la densité de défauts surfaciques du substrat 20 et l'isolation du substrat 20 de l'humidité ambiante, dépendent de l'état de surface 25 du substrat 20. Par exemple, la surface 25 du substrat 20 ne doit pas être affectée par l'usinage. On cherchera donc à éliminer, du moins minimiser, de la surface 25 du substrat 20 les défauts tels que rayures et microfissures.

Selon une forme d'exécution, la surface 25 du substrat 20 sur laquelle est formée la couche de passivation 30 est lissée, ou polie, de manière à obtenir une rugosité Ra inférieure à 100 nm. La figure 2 montre une vue schématique et en section de la surface 25. De manière préférée, la surface 25 est nivelée de manière que la surface 25 du substrat 20 présente une topologie de surface comportant des aspérités 27 ou des fossettes arrondies ayant un rayon de courbure supérieur à 500nm, préférablement supérieur à 4 µm. La surface 25 est nivelée ne comporte pas de facettes ou d'angles aigus qui pourraient résulter dans une possible concentration des contraintes lors d'une sollicitation mécanique.

De manière préférée, la surface 25 du substrat 20 doit également être propre, c'est-à-dire, ayant un état chimique de la surface maîtrisé. Un tel état chimique de la surface maîtrisé peut signifier que la surface 25 du substrat 20 ne contient sensiblement pas de contamination par des particules, d'oxydes natifs (dus à l'humidité et à l'oxygène de l'air), de matières organiques, de résidus de couches, de bases ou d'acides inorganiques ou d'autres contaminations métalliques. Autrement dit, la composition chimique à la surface 25 est aussi proche que possible de la composition chimique massique du substrat 20.

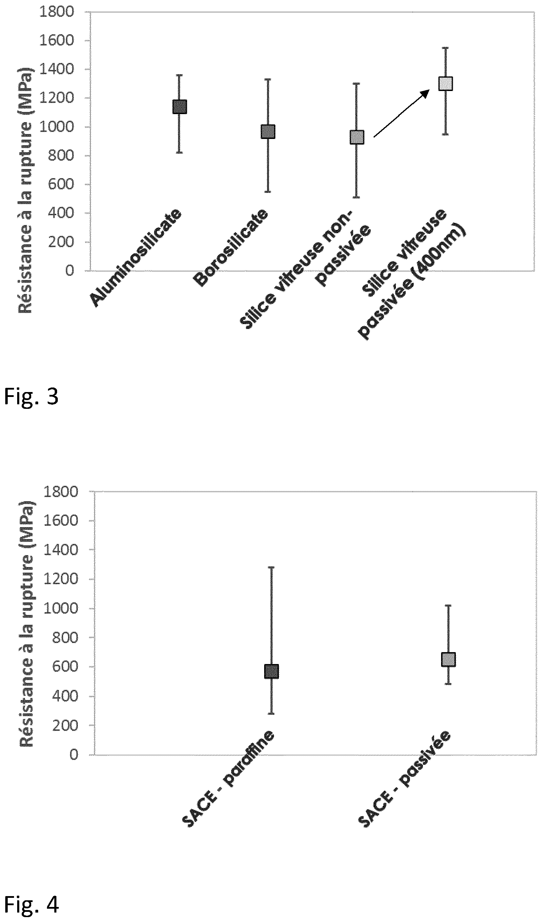

Des essais de la résistance à la rupture en flexion ont été réalisés pour des disques en verre ayant un diamètre de 10 mm et une épaisseur de 0.2 mm. Les verres utilisés comprennent un verre d'aluminosilicate, un verre de borosilicate et la silice vitreuse. Les disques sont polis sur les deux faces par un polissage de qualité optique résultant dans une rugosité Ra inférieure à 1 nm. Les disques ont été mesurés comprenant une couche de passivation 30 en SiON :H et ayant une épaisseur de 400 nm, et en absence de la couche de passivation 30. Les essais de la résistance à la rupture en flexion ont été réalisés en utilisant le test "Ball on three balls" (B3B). Les résultats de ces essais réalisés dans l'air et pour 30 disques, sont reportés à la figure 3.

Dans la figure 3, la flèche indique l'effet de la couche de passivation sur la distribution de la résistance à la rupture en flexion B3B, pour les disques en silice vitreuse comprenant une couche de passivation en SiON :H et ayant une épaisseur de 400 nm.

Des essais de résistance à la rupture en flexion 3 points meso-scale ont également été réalisés sur des micro-éprouvettes de section carrée de 0.2 mm. Les micro-éprouvettes ont été usinées dans des wafers de SiO₂ avec une technique comprenant préférentiellement une étape de gravage par dissolution chimique. Ce mécanisme est indispensable pour obtenir des surfaces usinées de qualité suffisante en termes de défauts et de contraintes résiduelles d'usinage. Les résultats des essais de flexion 3 points meso-scale sont reportés à la figure 4.

Dans la figure 4, la distribution de la résistance à la rupture est reportée pour des micro-éprouvettes qui ont été usinées à l'aide d'une méthode de gravure chimique assistée pas des étincelles (spark assisted chemical engraving, SACE). Les éprouvettes non-passivées sont sollicitées mécaniquement avec un enrobage de paraffine (SACE-paraffine). Les éprouvettes passivées (SACE-passivée) comportent une couche de passivation de 400 nm de SiON :H et sont sollicitées dans l'air. La sollicitation mécanique est appliquée sur les faces usinées. On considère que la couche de passivation est fonctionnelle dans la mesure où les performances mécaniques mesurées dans l'air sur les éprouvettes passivées sont au moins égales à celles mesurées sur les éprouvettes enrobées de paraffine. L'effet bénéfique de la passivation sur les performances mécaniques se manifeste également comme un resserrement de la distribution de la résistance à la rupture.

Les résultats des figures 3 et 4 montrent que, pour les deux états de surface initiaux de la silice vitreuse, c'est-à-dire de la surface 25 polie optique avec un Ra < 1 nm pour les essais B3B, ainsi que pour la surface 25 usinée pour les essais meso-scale, la couche de passivation 30 améliore les performances mécaniques.

En particulier, la résistance minimale des éprouvettes est améliorée. L'analyse statistique des résultats B3B (figure 3) montre une amélioration de 25% de la résistance à la rupture moyenne des disques de silice vitreuse passivés polis sur les deux faces. Les résultats indiquent également une distribution resserrée de la résistance à la rupture des éprouvettes.

Dans le cas des essais de flexion réalisés sur les disques dans la configuration B3B, deux épaisseurs de la couche de passivation 30 ont été évaluées. Il ressort de l'analyse de ces résultats que l'épaisseur de la couche de passivation 30 devrait préférentiellement être égale ou inférieure à 400 nm.

L'étude de la conformité de la croissance de la couche de passivation 30 (recouvrement d'une épaisseur de couche identique sur les éléments saillants ou rentrants dans le composant) montre que toutes les surfaces d'un composant 10 rassemblant des éléments caractéristiques horlogers tels que dents d'échappement, trous (diamètre 3 mm à 0.2 mm), poutre élancée, languette, pointe et élément rentrant, sont revêtues à satisfaction par la couche de passivation 30.

Le substrat 20 peut être revêtu de la couche de passivation 30 sur l'une, plusieurs ou toutes ses surfaces 25. Préférablement, la couche de passivation 30 peut être formée sur toutes les surfaces 25 du substrat 20. Encore préférablement, le composant 10 tridimensionnel possède une couche de passivation 30 d'épaisseur sensiblement uniforme sur toutes ses surfaces 25.

Dans un mode de réalisation, le composant horloger peut comprendre un composant d'un dispositif d'affichage ou d'habillage.

Selon un mode de réalisation, un procédé de fabrication d'un composant 10 horloger comprend les étapes :
d'usiner le verre de manière à former un substrat 20 ayant une dimension latérale de l'ordre du centimètre ou inférieure et une épaisseur de l'ordre du millimètre ou inférieure ; et
de former une couche de passivation 30 à la surface 25 du substrat 20, la couche de passivation 30 ayant une épaisseur inférieure à 1000 nm et comprenant une céramique réfractaire comprenant au moins 1 % atomique d'hydrogène.

La formation de la couche de passivation 30 peut être réalisée par un procédé de dépôt chimique en phase vapeur. En particulier, la formation de la couche de passivation 30 peut être réalisée par un procédé de dépôt chimique en phase vapeur assisté par plasma (PECVD) dédié au revêtement uniforme tridimensionnel du composant 10. Par exemple, la couche de passivation 30 peut être réalisée dans un réacteur comprenant des moyens de rotation/mélange/retournement qui facilitent un dépôt uniforme de la couche de passivation 30 sur un ou une pluralité de composants 10 tridimensionnels, tel que décrit dans la demande de brevet suisse CH715599. Afin de garantir que le dépôt de la couche de passivation 30 ne soit pas à l'origine de défauts supplémentaires sur la surface 25, on privilégie des procédés de recouvrement doux et à basses températures, comme la croissance thermique ou le dépôt de couche par PECVD.

Selon une forme d'exécution, le procédé peut comprendre en outre une étape de dissolution chimique en phase vapeur ou liquide de la surface 25 du substrat 20, préalable à l'étape de formation de la couche de passivation 30.

L'étape d'usiner le substrat 20 peut comprendre la dissolution chimique sélective du substrat 20 et la libération du composant 10 usiné.

Selon une forme d'exécution, l'étape d'usiner peut comprendre l'un des procédés suivants : gravure ionique réactive profonde (deep reactive-ion etching, DRIE), gravure chimique assistée pas des étincelles (spark assisted chemical engraving, SACE), ou marquage laser à très courtes impulsions (femto à pico secondes). L'étape d'usiner peut être suivie de manière optionnelle par la dissolution chimique sélective du volume marqué (ou gravure laser sélective).

D'autres méthodes d'usinage telles que la gravure profonde induite par la lumière (light induced deep etching, LIDE) ou le marquage laser et dissolution préférentielle (selective laser etching, SLE) comprenant toutes une étape de dissolution chimique pour la libération du composant 10 usiné sont également utilisables dans le cadre de la présente invention.

Selon une forme d'exécution, le procédé comprend une étape de lisser et/ou niveler la surface 25 du substrat 20 de manière à obtenir des aspérités ou des fossettes arrondies avec un rayon de courbure supérieur à 500nm, préférablement supérieur à 4 µm. L'étape de lisser et/ou niveler peut également comprendre le polissage de la surface 25 recevant la couche de passivation 30. De préférence, le polissage est réalisé avec une qualité optique résultant dans une rugosité Ra inférieure à 1 nm. L'étape de lisser et/ou niveler la surface 25 est réalisée avant la formation de la couche de passivation 30.

Selon une forme d'exécution, le procédé comprend une étape de nettoyage de la surface, réalisée avant la formation de la couche de passivation 30 afin d'obtenir un état chimique de la surface maîtrisé, c'est-à-dire que la surface 25 ne contient sensiblement pas de contamination par des particules, d'oxydes natifs (dus à l'humidité et à l'oxygène de l'air), de matières organiques, de résidus de couches, de bases ou d'acides inorganiques ou d'autres contaminations métalliques. L'étape de nettoyage de la surface est réalisée avant la formation de la couche de passivation 30.

### Numéros de référence employés sur les figures

- 10: composant
- 20: substrat
- 25: surface
- 27: aspérité
- 30: couche de passivation

## Revendications

1. Composant (10) horloger avec une résistance à la rupture améliorée, comprenant
Un substrat (20) en verre transparent à la lumière visible et ayant une dimension latérale de l'ordre de quelques centimètres ou inférieure et une épaisseur de l'ordre du millimètre ou inférieure;
le substrat (20) étant revêtu d'une couche de passivation (30), directement en contact avec la surface (25) du substrat (20) et ayant une épaisseur inférieure à 1000 nm, la couche de passivation (30) comprenant au moins une céramique réfractaire comprenant au moins 1 % atomique d'hydrogène.

2. Le composant selon la revendication 1,
dans lequel la couche de passivation (30) a une épaisseur inférieure à 600 nm et préférablement inférieure à 400 nm.

3. Le composant selon la revendication 1 ou 2,
dans lequel la céramique réfractaire comprend un oxynitrure de silicium hydrogéné (SiON:H), oxycarbure de silicium hydrogéné (SiOₓC_{y}:H), carbure de silicium hydrogéné (SiC:H), nitrure de silicium hydrogéné (Si₃N₄:H), ou une combinaison de ces céramiques ainsi que leur empilement.

4. Le composant, selon l'une des revendications 1 à 3,
dans lequel la surface (25) du substrat (20) a une rugosité Ra inférieure à 100 nm.

5. Le composant selon la revendication 4,
dans lequel la surface (25) du substrat (20) comporte des aspérités ayant un rayon de courbure supérieur à 500nm, préférablement supérieur à 4 µm.

6. Le composant selon l'une des revendication 1 à 5,
dans lequel le verre comprend la silice vitreuse ou un verre contenant de la silice vitreuse.

7. Le composant selon l'une des revendication 1 à 6, comprenant un composant étant sollicité mécaniquement.

8. Le composant selon l'une des revendication 1 à 7, comprenant un composant d'un dispositif d'affichage ou d'habillage.

9. Procédé de fabrication d'un composant horloger selon l'une des revendications 1 à 8, le procédé comprenant les étapes:
d'usiner le verre de manière à former le substrat (20) ayant une dimension latérale de l'ordre du centimètre ou inférieure et une épaisseur de l'ordre du millimètre ou inférieure;
de former la couche de passivation (30) sur la surface du substrat (20), la couche de passivation (30) ayant une épaisseur inférieure à 1000 nm et comprenant au moins une céramique réfractaire comprenant au moins 1 % atomique d'hydrogène.

10. Le procédé selon la revendication 9,
dans lequel la formation de la couche de passivation (30) est réalisée par un procédé de dépôt chimique en phase vapeur.

11. Le procédé selon la revendication 10,
dans lequel la formation de la couche de passivation (30) est réalisée par un procédé de dépôt chimique en phase vapeur assisté par plasma (PECVD).

12. Le procédé selon l'une des revendications 9 à 11,
comprenant une étape de lissage et/ou nivellement de la surface (25) du substrat (20), de manière à obtenir une topologie de surface comportant des aspérités (27) ayant un rayon de courbure supérieur à 500 nm, préférablement supérieur à 4 µm.

13. Le procédé selon l'une des revendications 9 à 12, comprenant en outre une étape de dissolution chimique en phase vapeur ou liquide de la surface du substrat (20), préalable à l'étape de formation de la couche de passivation (30).

14. Le procédé selon l'une des revendications 9 à 13,
dans lequel l'étape d'usiner le substrat (20) comprend la dissolution chimique sélective du substrat (20) et la libération du composant (10) usiné.

## Patentansprüche

1. Uhrenkomponente (10) mit verbesserter Bruchfestigkeit, umfassend:
ein Glassubstrat (20), welches für sichtbares Licht transparent ist und eine seitliche Abmessung in der Grössenordnung von einigen Zentimetern oder weniger und eine Dicke in der Grössenordnung von einem Millimeter oder weniger aufweist;
wobei das Substrat (20) mit einer Passivierungsschicht (30) beschichtet ist, welche direkt mit der Oberfläche (25) des Substrats (20) in Kontakt steht und eine Dicke von weniger als 1000 nm aufweist, wobei die Passivierungsschicht (30) mindestens eine feuerfeste Keramik mit mindestens 1 Atom-% Wasserstoff umfasst.

2. Komponente gemäss Anspruch 1, worin die Passivierungsschicht (30) eine Dicke von weniger als 600 nm und vorzugsweise weniger als 400 nm aufweist.

3. Komponente gemäss Anspruch 1 oder 2, worin die feuerfeste Keramik hydriertes Siliziumoxynitrid (SiON:H), hydriertes Siliziumoxycarbid (SiOₓC_{y}:H), hydriertes Siliziumkarbid (SiC:H), hydriertes Siliziumnitrid (Si₃N₄:H) oder eine Kombination dieser Keramiken sowie deren Stapelung umfasst.

4. Komponente gemäss einem der Ansprüche 1 bis 3, worin die Oberfläche (25) des Substrats (20) eine Rauheit Ra von weniger als 100 nm aufweist.

5. Komponente gemäss Anspruch 4, worin die Oberfläche (25) des Substrats (20) Unebenheiten mit einem Krümmungsradius von mehr als 500 nm, vorzugsweise mehr als 4 µm, aufweist.

6. Komponente gemäss einem der Ansprüche 1 bis 5, worin das Glas Quarzglas oder ein Quarzglas enthaltendes Glas umfasst.

7. Komponente gemäss einem der Ansprüche 1 bis 6, umfassend eine mechanisch beanspruchte Komponente.

8. Komponente gemäss einem der Ansprüche 1 bis 7, umfassend einen Bestandteil einer Anzeige- oder Abdeckvorrichtung.

9. Verfahren zur Herstellung einer Uhrenkomponente gemäss einem der Ansprüche 1 bis 8, wobei das Verfahren die folgenden Schritte umfasst:
Bearbeiten des Glases, um das Substrat (20) mit einer seitlichen Abmessung in der Grössenordnung von einem Zentimeter oder weniger und einer Dicke in der Grössenordnung von einem Millimeter oder weniger zu bilden;
Bilden der Passivierungsschicht (30) auf der Oberfläche des Substrats (20), wobei die Passivierungsschicht (30) eine Dicke von weniger als 1000 nm aufweist und mindestens eine feuerfeste Keramik mit mindestens 1 Atom-% Wasserstoff umfasst.

10. Verfahren gemäss Anspruch 9, worin die Bildung der Passivierungsschicht (30) durch einen chemischen Gasphasenabscheidungsprozess erfolgt.

11. Verfahren gemäss Anspruch 10, worin die Bildung der Passivierungsschicht (30) durch einen plasmaunterstützten chemischen Gasphasenabscheidungsprozess (PECVD) erfolgt.

12. Verfahren gemäss einem der Ansprüche 9 bis 11, umfassend einen Schritt des Glättens und/oder Einebnens der Oberfläche (25) des Substrats (20), um eine Oberflächentopologie zu erhalten, welche Unebenheiten (27) mit einem grösseren Krümmungsradius als 500 nm, vorzugsweise grösser als 4 µm, aufweist.

13. Verfahren gemäss einem der Ansprüche 9 bis 12, zudem umfassend einen Schritt der chemischen Auflösung in der Dampf- oder Flüssigphase der Oberfläche des Substrats (20) vor dem Schritt der Bildung der Passivierungsschicht (30).

14. Verfahren gemäss einem der Ansprüche 9 bis 13, worin der Schritt der Bearbeitung des Substrats (20) das selektive chemische Auflösen des Substrats (20) und das Freigeben der bearbeiteten Komponente (10) umfasst.

## Claims

1. A watch component (10) with improved breakage resistance, comprising
a glass substrate (20) transparent to visible light and having a lateral dimension of the order of a few centimetres or less and a thickness of the order of millimetres or less;
the substrate (20) being coated with a passivation layer (30), directly in contact with the surface (25) of the substrate (20) and having a thickness of less than 1000 nm, the passivation layer (30) comprising at least one refractory ceramic comprising at least 1 % atomic hydrogen.

2. The component according to claim 1, wherein the passivation layer (30) has a thickness of less than 600 nm and preferably less than 400 nm.

3. The component according to claim 1 or 2, wherein the refractory ceramic comprises hydrogenated silicon oxynitride (SiON:H), hydrogenated silicon oxycarbide (SiOxCy:H), hydrogenated silicon carbide (SiC:H), hydrogenated silicon nitride (Si3N4:H), or a combination of these ceramics as well as the stacking thereof.

4. The component according to any of claims 1 to 3, wherein the surface (25) of the substrate (20) has a roughness Ra of less than 100 nm.

5. The component according to claim 4, wherein the surface (25) of the substrate (20) comprises asperities having a radius of curvature exceeding 4 µm.

6. The component according to any of claims 1 to 5, wherein the glass comprises vitreous silica or a glass containing vitreous silica.

7. The component according to any of claims 1 to 6, comprising a mechanically stressed component.

8. The component according to any of claims 1 to 7, comprising a component of a display device or an external watch part.

9. A process for manufacturing a watch component according to any of claims 1 to 8, the process comprising the steps of:
machining the glass so as to form the substrate (20) having a lateral dimension of the order of centimetres or less and a thickness of the order of millimetres or less;
forming the passivation layer (30) on the surface of the substrate (20), the passivation layer (30) having a thickness of less than 1000 nm and comprising at least one refractory ceramic comprising at least 1 % atomic hydrogen.

10. The process according to claim 9, wherein the passivation layer (30) is formed by a chemical vapour deposition process.

11. The process according to claim 10, wherein the passivation layer (30) is formed by a plasma assisted chemical vapour deposition (PECVD) process.

12. The process according to any of claims 9 to 11, comprising a step of smoothing and/or levelling the surface (25) of the substrate (20), so as to obtain a surface topology comprising asperities (27) having a radius of curvature exceeding 500 nm, preferably exceeding 4 µm.

13. The process according to any of claims 9 to 12, further comprising a step of chemical dissolution in the vapour or liquid phase of the surface of the substrate (20), prior to the step of forming the passivation layer (30).

14. The process according to any of claims 9 to 13, wherein the step of machining the substrate (20) comprises selectively chemically dissolving the substrate (20) and releasing the machined component (10).
